# FASCICULE DE BREVET EUROPEEN

(11) **EP 1 092 350 B1**
(45) Date de publication et mention de la délivrance du brevet: **21.06.2006**
(21) Numéro de dépôt: 99116406.2
(22) Date de dépôt: 20.08.1999
(51) Int. Cl.: A23G 9/28, A23P 1/00

(54) **Articles arrondis de confiserie glacée et procédé de fabrication**
Eiscremeartikel mit abgerundeter Form und deren Herstellungsverfahren
Ice-cream article having a rounded shape and process for its preparaton

(43) Date de publication de la demande: 18.04.2001
(73) Titulaire: SOCIETE DES PRODUITS NESTLE S.A., 1800 Vevey (CH)
(72) Inventeur: Marchon, Jean-Michel, 6000 Beauvais (FR); Daouse, Alain, 60430 Noailles (FR)
(74) Mandataire: Elleby, Gudrun

(56) Documents cités:
- EP-A- 0 888 720
- FR-A- 2 695 300
- GB-A- 2 172 541
- US-A- 4 925 689
- US-A- 5 031 567

## Description

L'invention se rapporte au domaine du formage et du dosage simultanés d'articles, consistant à conformer et à débiter en portions de forme arrondie une confiserie glacée de consistance pâteuse.

Le problème à la base de l'invention est la fabrication mécanique à grande échelle d'articles arrondis, notamment spériques de confiserie glacée, par exemple de crème glacée, glace au lait ou de sorbet, ne comportant pas d'enrobage final, par exemple de couverture en chocolat. Ainsi, lorsqu'il n'y a pas d'enrobage susceptible de masquer les légers défauts de forme, les portions formées obtenues doivent avoir une rotondité régulière, un aspect général homogène et rappeler si possible la forme et l'aspect des boules réalisées manuellement à l'aide d'une cuillère à glace, par exemple une certaine rugosité dans une surface ayant par ailleurs un arrondi régulier, pour ainsi dire "fait-main".

Les boules préformées n'existent pas pour l'instant dans le commerce, car les tentatives de formage par moulage dans un moule en deux parties, par exemple entre deux cavités hémisphériques, n'ont pas donné l'aspect souhaité, les boules étant trop lisses en surface et le plan de joint visible.

On connaît, par exemple de US-A-5 031 567, un appareil de fabrication en continu de portions de crème glacée, comprenant l'extrusion d'un boudin de masse pâteuse, le conformage du boudin et son découpage en portions de forme quasi-phérique au moyen de diaphragmes, ainsi que le dépôt des portions sur un tapis transporteur en défilement. Après dépose, les portions passent successivement dans un tunnel de durcissement et dans une enrobeuse où elles sont recouvertes d'une couche de chocolat. Les boules obtenues par ce moyen ne sont pas parfaitement sphériques. La glace est relativement molle à la sortie des ajutages d'extrusion, même si le freezer est poussé au maximum de sa capacité frigorifique. De ce fait, la boule est déformée sous l'effet de son propre poids lors de l'extrusion et a tendance à s'affaisser lorsquelle tombe sur la surface plane du tapis transporteur en prenant une base plane avant qu'elle ne soit suffisamment refroidie par le tunnel de durcissement. D'autre part, la marque des couteaux du diaphragme est nettement visible sur sa surface. De plus, il y a un effet de goutte sur le sommet par formation d'une protubérence en forme de pointe lorsque la boule est détachée par les couteaux du diaphragme. Ces marques sont masquées lorsque le produit est ensuite enrobé. Cependant, la déformation des articles et les marques apparentes sur sa surface sont perçues comme des défauts visuels majeurs pour des articles "nus" et donc sans enrobage.

Il est possible d'améliorer la rotondité des produits en accélérant la phase de durcissement en limitant la durée pendant laquelle le produit peut s'affaisser sur lui-même, par exemple en utilisant un tunnel super refroidi. Dans le même ordre d'idée, on peut faire tomber les boules dans un bain d'azote liquide pour réaliser un croûtage de surface. Par de tels procédés, on peut effectivement améliorer la rotondité des produits, mais ces procédés sont coûteux et ne répondent pas au problème des marques sur leur surface.

Le but de l'invention est de pallier les inconvénients des procédés connus.

L'invention concerne donc un procédé de fabrication d'un article arrondi de confiserie glacée de rotondité régulière, de révolution, par extrusion-formage, essentiellement dépourvu de sommet, d'angle et de traces d'outil de formage et de cohésion supérieure à 95 %caractérisé par le fait
que l'on alimente en continu une tête de formage à diaphragmes avec un boudin extrudé de confiserie glacée de température < ou = -7°C à pression constante, de sorte que la confiserie glacée est dirigée alternativement vers l'un ou l'autre diaphragme, ce qui évite la création d'une contre pression en amont de la dite tête de formage,
que l'on forme et découpe des portions individuelles arrondies à partir du dit boudin par ouverture, puis fermeture des diaphragmes et
que l'on dépose les portions ainsi formées directement dans un conditionnement en défilement en contrebas de la tête de formage

Dans le contexte de l'inventivn, une confiserie glacée désigne une crème glacée, une glace au lait ou un sorbet foisonnés à 80 à 120 %, à l'exclusion d'une glace à l'eau.

La confiserie glacée doit avoir une bonne cohésion. Celà signifie qu'elle doit avoir un consistance pâteuse et être relativement dure pour pouvoir être formée en continu et à haute cadence par extrusion-formage, puis déposée dans un conditionnement en défilement en contrebas de la formeuse, et celà sans subir de déformation notable de son volume ni de sa surface pendant l'extrusion, pendant le dépôt dans le conditionnement et jusqu'au durcissement.

On exprime la cohésion comme le rapport, exprimé en pourcent, entre la hauteur de l'article juste avant le durcissement et celle à la sortie de la buse d'extrusion. Ainsi, une cohésion supérieure à 95 % selon l'invention signifie que la déformation de l'article n'excède pas 5 %.

Selon la composition du mix, la température de sortie de l'extrudeur, la capacité de l'extrudeur et le débit de confiserie glacée, la confiserie glacée est à une température < ou = - 7° C et de préférence de -10° C à - 12°C dans le cas d'une crème glacée et de préférence de - 16° C à - 20° C dans le cas d'une glace au lait ou d'un sorbet . Une telle confiserie glacée peut être préparée au moyen d'un extrudeur à vis refroidi, de préférence un extrudeur bi-vis.

Dans le contexte de l'invention, un article arrondi peut avoir toute forme de révolution, plus ou moins complexe, par exemple tronconique à base circulaire avec sommet arrondi, cylindrique avec sommet arrondi, la forme d'une quille, la forme d'un fruit, par exemple de poire, de citron ou de fraise, et de préférence la forme d'une boule, d'une zone sphérique ou d'un hémisphère. Une boule a un diamètre de 30 à 70 mm et de préférence un diamètre de 30 à 40 mm, par exemple de 34 mm environ, pour un volume de 14 à 180 ml et de préférence de 14 à 25 ml, par exemple 20 à 25 ml.

Selon un mode de réalisation préféré, la tête de formage est constituée de deux diaphragmes. L'alimentation en confiserie glacée a ainsi lieu alternativement vers l'un ou l'autre des diaphragmes. On peut prévoir que les diaphragmes sont alimentés alternativement par un boisseau rotatif assurant la distibution et que les couteaux constitutifs des diaphrames sont actionnés de manière synchronisée pour qu'il n'y ait pas de contre pression en amont et donc pas de variation notable de débit d'alimentation par le fait que, lorsque l'un des diaphragmes est entièrement ouvert, l'autre est entièrement fermé. Un tel système peut être tel que décrit par exemple dans US-A-5 031 567 (également EP-A-0 373 246), le système de mise en mouvement du boisseau et des diaphragmes étant mécanique, par exemple par un moteur commun avec variateur en prise avec le boisseau et les cames actionnant les diaphragmes en synchronisme.

Le boisseau et les diaphragmes peuvent être actionnés individuellement par des servomoteurs, de sorte qu'il est possible de réaliser en continu des portions de formes de révolution différentes les unes des autres.

Après formage et découpage, les portions sont déposées directement dans des alvéoles ménagées en files et rangées dans des plateaux de conditionnement en contrebas de la tête de formage, par exemple en matière plastique thermoformée. Les plateaux sont portés par une chaîne sans fin indexée cheminant en continu et ralentissant au moment du dépôt ou en discontinu pas à pas, sous la tête de formage, de sorte que chaque portion est déposée dans une alvéole. De préférence, chaque plateau est fermé par un couvercle complémentaire coiffant les portions, par exemple encliqueté sur le plateau et de préférence en matière plastique thermoformée translucide.

Les portions formées sont suffisamment dures au moment du formage pour que leur déformation par l'opération d'extrusion dynamique soit négligeable. La déformation par la chute des portions dans les alvéoles est faible, généralement de l'ordre de 3 % au maximum pour une distance entre le diaphragme et les alvéoles de l'ordre de 10 cm environ.

Un avantage déterminant du procédé selon l'invention est sa grande flexibilité, sa haute productivité et sa qualité du point de vue de l'hygiène, puisque les portions sont déposées directement dans leur emballage sans entrer en contact avec des surfaces de reprise intermédiaires.

Les dessins annéxés illustrent un mode de réalisation de l'invention donné à tire d'exemple.

Dans ceux-ci,
La figure 1 est une vue schématique d'ensemble du procédé de fabrication,
La figure 2 est une vue schématique de détail des moyens d'actionnement de la tête de formage et
La figure 3 est une vue en perspective éclatée d'un conditionnement contenant des articles.

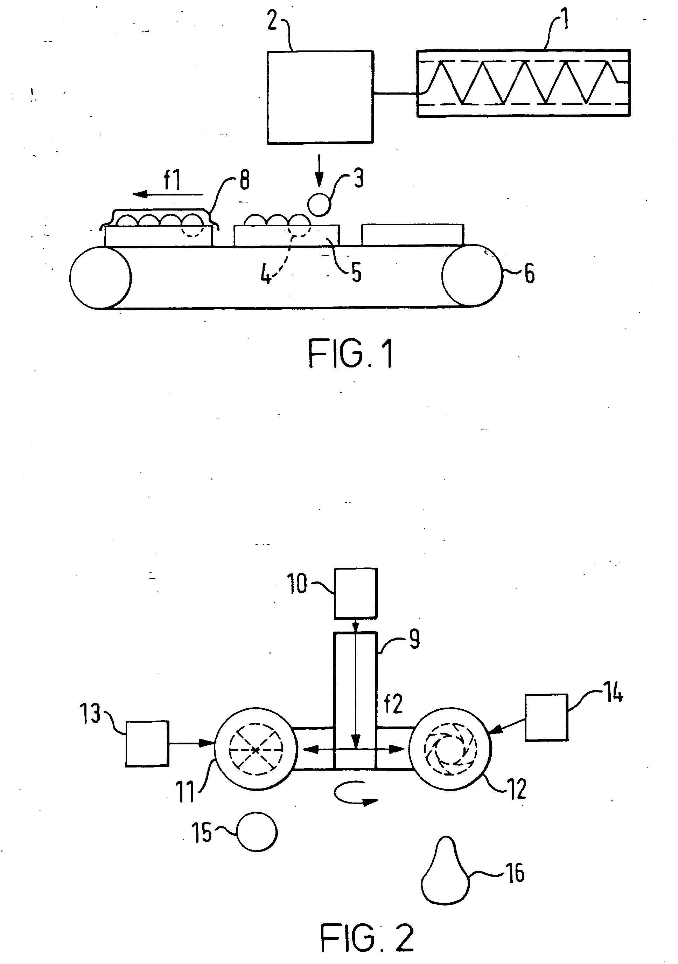

A la figure 1, un mix de crème glacée est structuré et refroidi au moyen de l'extrudeur bi-vis 1 jusqu'à la température de sortie de - 14° C. La crème glacée froide a un foisonnement de 90 % en volume. On utilise comme extrudeur un appareil tel que décrit dans US-A-5 345 781. En variante, on peut utiliser un extrudeur tel que décrit dans US-A-5 919 510 avec une température de sortie de - 8° C. A la sortie, on délivre un boudin cylindrique de crème glacée durcie.

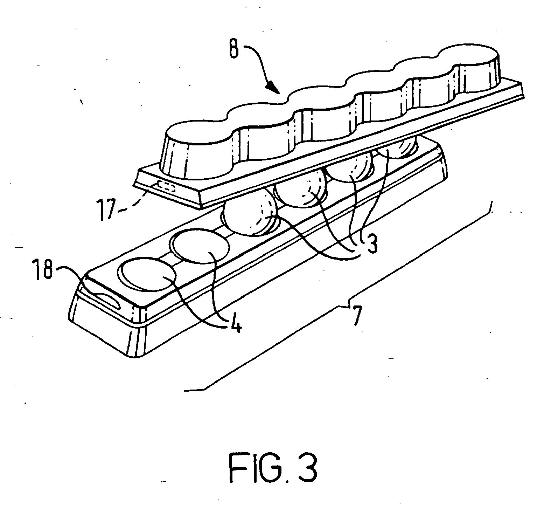

On forme le boudin en boules au moyen de la tête de formage 2 à diaphragmes à six à huit couteaux. Les couteaux des diaphragmes sont incurvés vers l'intérieur pour obtenir des boules 3 parfaitement rondes. On dépose les boules 3 dans les alvéoles 4 thermoformées dans les plateaux 5 en matière plastique, portés par la chaîne sans fin 6 cheminant selon la flèche f1, pas à pas, et indexée sur la cadence de la tête de formage 2. Les plateaux 5 sont constitués en fait de lignes de barettes 7 telles que représentées à la figure 3 ci-après. Sur la figure 1, on n'a représenté qu'une ligne de barettes 7 par simplification, mais la tête de formage délivre en réalité des boules 3 en deux lignes. Une fois remplie de boules, on recouvre une barette avec un couvercle 8 thermoformé en matière plastique translucide encliqueté sur la dite barette. On dirige ensuite les plateaux de barettes vers un tunnel de durcissement non représenté.

La tête de formage est telle que représentée aux figures 4 et 5 de US-A-5 031 567 (également EP-A-0 373 246), et les diaphragmes et le boisseau sont actionnés en synchronisme tel que décrit dans ce document dans un premier mode de réalisation.

Dans un second mode de réalisation à partir d'une tête de formage de même construction que précédemment et actionnée de manière différente comme montré à la figure 2, le boisseau 9 est alimenté en crème glacée selon f2 et sa rotation selon f3 est dirigée par un servomoteur 10 pour distribuer la crème glacée alternativement selon f4 et f5 vers les diaphragmes 11 et 12. Un servomoteur 13 opère le diaphragme 11 de manière indépendante et un servomoteur 14 opère le diaphragme 12 également de manière indépendante, et les différents servomoteurs sont pilotés par un automate programmable de manière à assurer un débit constant de crème glacée sans formation de contre-pression. Du fait que les diaphragmes 11 et 12 peuvent être conduits de manière indépendante l'un de l'autre, il est possible de réaliser des portions de formes différentes à partir d'une même tête de formage, par exemple une boule 15 et une poire 16. On peut ainsi varier les formes des portions d'une barette à l'autre ou dans la même barette.

A la figure 3, les portions en forme de boules 3 de crème glacée sont disposées dans les alvéoles 4 en ligne dans des barettes 7 en matière plastique thermoformée, chaque barette 7 contenant six boules 3. Les barettes 7 sont couvertes du couvercle 8 thermoformé dans une matière plastique translucide. Le couvercle 8 est encliquetable sur la barette 7 de manière connue, par exemple au moyen d'un élément tel qu'une languette 17 (ou une patte) résiliente à l'intérieur de chaque face extrême du couvercle 8 venant prendre sur un évidement 18 complémentaire à l'extérieur de chaque face extrême correspondante de la barette 7. On peut prévoir par exemple trois barettes 7 en lignes parallèles, contenant respectivement des boules de crème glacée au chocolat, à la vanille et au praliné ou respectivement des boules à la vanille aux fruits rouges et au citron, placées dans un étui ou une boîte de suremballage en carton, non représenté. Dans ce cas, il est clair que pour la mise en boîtes, il est nécessaire de prévoir la séparation des lignes de barettes, puis leur convergence en trois lignes, ce qui peut être réalisé par des dispositifs mécaniques de manière connue.

Dans le mode de réalisation représenté, les articles représentés sont des boules. On peut changer la forme des articles en modifiant le rythme d'ouverture et de fermeture des diaphragmes. On peut aussi agir sur la courbure et le tranchant des lames des diaphragmes pour modifier l'arrondi des articles. Les couteaux peuvent être entaillés de manière à produit des effets décoratifs de surface.

Dans le mode de réalisaton représenté, la tête comprend deux diaphragmes.
Sans sortir du cadre de l'invention, on peut augmenter le nombre des diaphragmes. On peut également remplacer une conduite d'amenée simple du boudin par une conduite comportant des parois de séparation ou par une conduite coaxiale de diamètre inférieur amenant plusieurs confiseries glacées différentes, de manière à réaliser des articles bi- ou multi-parfum par coextrusion.

## Revendications

1. Procédé de fabrication d'un article arrondi de confiserie glacée de rotondité régulière, de révolution, par extrusion-formage,
essentiellement dépourvu de sommet, d'angle et de traces d'outil de formage et de cohésion supérieure à 95 %, **caractérisé par le fait**
**que** l'on alimente en continu une tête de formage à diaphragmes avec un boudin extrudé de confiserie glacée de température < ou = - 7° C à pression constante, de sorte que la confiserie glacée est dirigée alternativement vers l'un ou l'autre diaphragme, ce qui évite la création d'une contre pression en amont de la dite tête de formage,
**que** l'on forme et découpe des portions individuelles arrondies à partir du dit boudin par ouverture, puis fermeture des diaphragmes et
**que** l'on dépose les portions ainsi formées directement dans un conditionnement en défilement en contrebas de la tête de formage.

2. Procédé selon la revendication 1, dans lequel la confiserie glacée est une crème glacée, une glace au lait ou un sorbet foisonnés à 80 à 120 %, à l'exclusion d'une glace à l'eau.

3. Procédé selon la revendication 1, dans lequel l'article de révolution est tronconique à base circulaire avec sommet arrondi, cylindrique avec sommet arrondi, en forme de quille, en forme d'un fruit, notamment de poire, de citron ou de fraise, et de préférence en forme de boule, de zone sphérique ou d'un hémisphère.

4. Procédé selon la revendication 1, dans lequel l'article est constitué d'une boule de diamètre de 30 à 70 mm et de préférence de diamètre de 30 à 40 mm, notamment de 34 mm environ, pour un volume de 14 à 180 ml et de préférence de 14 à 25 ml, par exemple 20 à 25 ml.

5. Procédé selon la revendication 2, dans lequel la température à la sortie de l'extrusion/formage est < ou = - 7° C et de préférence de -10° C à - 12°C dans le cas d'une crème glacée et de préférence de - 16° C à - 20° C dans le cas d'une glace au lait ou d'un sorbet .

6. Procédé selon la revendication 1, dans lequel on conditionne les protions en ligne dans les alvéoles de barettes en matière plastique thermoformées et dans lequel les barettes sont suremballées dans des boîtes, notamment en carton.

7. Procédé selon la revendication 6, dans lequel la barette est fermée par un couvercle complémentaire coiffant les portions, notamment encliqueté sur la barette et en matière plastique thermoformée translucide.

8. Procédé selon la revendication 1, dans lequel la tête de formage est constituée de deux diaphragmes, l'alimentation en confiserie glacée a lieu alternativement vers l'un ou l'autre des diaphragmes par un boisseau rotatif assurant la distibution et les couteaux constitutifs des diaphrames sont actionnés de manière synchronisée pour qu'il n'y ait pas de contre pression en amont et donc pas de variation notable de débit d'alimentation par le fait que, lorsque l'un des diaphragmes est entièrement ouvert, l'autre est entièrement fermé.

9. Procédé selon la revendication 8, dans lequel le boisseau et les diaphragmes sont actionnés individuellement par des servomoteurs, de sorte qu'il est possible de réaliser en continu des portions de formes de révolution différentes les unes des autres.

## Claims

1. A process for manufacturing a rounded frozen confectionery article of regular revolutional roundness by extrusion/shaping, essentially lacking an angular summit and marks left by the shaping tool and having cohesion greater than 95%, **characterised in that** a shaping head with diaphragms is continuously fed with an extruded sausage of frozen confectionery at a temperature of < or = -7°C at constant pressure, such that the frozen confectionery is directed alternately towards one or the other diaphragm, so avoiding the occurrence of back pressure upstream of said shaping head,
**in that** individual rounded portions are shaped and cut from said sausage by opening and then closing the diaphragms and
**in that** the portions shaped in this manner are placed directly into packaging which is being conveyed beneath the shaping head.

2. A process according to claim 1, in which the frozen confectionery is an 80 to 120% whipped ice cream, a milk ice or a sorbet, with water ice being excluded.

3. A process according to claim 1, in which the revolutional article is frustoconical with a circular base and rounded summit, cylindrical with a rounded summit, in the shape of a skittle, in the shape of a fruit, in particular of a pear, lemon or strawberry, and preferably in the shape of a ball, of a spherical zone or a hemisphere.

4. A process according to claim 1, in which the article is made up of a ball of a diameter of 30 to 70 mm and preferably of a diameter of 30 to 40 mm, in particular of approximately 34 mm, with a volume of 14 to 180 ml and preferably of 14 to 25 ml, for example of 20 to 25 ml.

5. A process according to claim 2, in which the temperature on discharge from extrusion/shaping is < or = -7°C and preferably from -10°C to -12°C in the case of an ice cream and preferably from -16°C to - 20°C in the case of a milk ice or a sorbet.

6. A process according to claim 1, in which the portions are packaged in a row in the indentations of trays made of thermoformed plastics material and in which the trays are provided with an outer packaging box, in particular made of paperboard.

7. A process according to claim 6, in which the tray is closed by a complementary lid covering the portions, in particular clipped onto the trays and made of translucent thermoformed plastics material.

8. A process according to claim 1, in which the shaping head is made up of two diaphragms, the frozen confectionery is fed alternately to one or the other of the diaphragms by a rotary plug effecting distribution and the blades making up the diaphragms are actuated in synchronised manner such that there is no upstream back pressure and thus no appreciable variation in the feed rate due to the fact that, when one of the diaphragms is entirely open, the other is entirely closed.

9. A process according to claim 8, in which the plug and the diaphragms are actuated individually by servomotors, such that it is possible continuously to produce portions of revolutional shapes which differ from one another.

## Patentansprüche

1. Verfahren zum Herstellen eines gerundeten gefrorenen Konditorei-Artikels von regulärer Umdrehungs-Rundheit mittels Extrusions-Formung, im Wesentlichen frei von Spitze(n), Winkel(n) und Spuren des Formungs-Werkzeugs, und von einer Kohäsion, welche größer ist als 95%,
**dadurch gekennzeichnet,**
**dass** einem Mittels-Blenden-Formungs-Kopf kontinuierlich eine extrudierte Wurst aus gefrorener Konditoreiware der Temperatur < oder = -7°C mit konstantem Druck zugeführt wird, wobei die gefrorene Konditoreiware alternativ zu der einen oder der anderen Blende gerichtet wird, wodurch die Bildung eines Gegendruckes stromaufwärts von dem genannten Formungs-Kopf vermieden wird,
**dass** ausgehend von dieser Wurst mittels Öffnen und anschließendem Schließen der Blenden individuelle gerundete Portionen geformt und geschnitten werden, und
**dass** die auf diese Weise geformten Portionen unter Einschnüren und unter Absenken des Formungs-Kopfes direkt in einer Konfektionierung angeordnet werden.

2. Verfahren gemäß Anspruch 1, wobei die gefrorene Konditoreiware eine gefrorene Creme, ein Milch-Eis oder ein zu 80 bis 120% mit Luftzuschlag versehenes Sorbet ist, mit Ausnahme eines Wasser-Eises.

3. Verfahren gemäß Anspruch 1, wobei der Rotations-Artikel Kegelstumpf-förmig mit kreisförmiger Basis und mit gerundeter Spitze, zylindrisch mit gerundeter Spitze, Kegel-förmig, Frucht-förmig, insbesondere Birnen-förmig, Zitrone-förmig oder Erdbeer-förmig, und bevorzugt Kugel-förmig mit sphärischer Zone oder einer Hemisphäre ist.

4. Verfahren gemäß Anspruch 1, wobei der Artikel aus einer Kugel besteht, welche einen Durchmesser von 30 bis 70 mm, und bevorzugt einen Durchmesser von 30 bis 40 mm, insbesondere von ungefähr 34 mm aufweist, für ein Volumen von 14 bis 180 ml, und bevorzugt vom 14 bis 25 ml, beispielsweise 20 bis 25 ml.

5. Verfahren gemäß Anspruch 2, wobei die Temperatur am Ausgang der Extrusion/Formung < oder = -7°C, und bevorzugt von -10°C bis -12°C im Falle einer gefrorenen Creme, und bevorzugt von -16°C bis -20°C im Falle eines Milch-Eises oder eines Sorbets beträgt.

6. Verfahren gemäß Anspruch 1, wobei die Portionen in Reihe in Barett-/Barren-Hohlräume aus thermisch geformtem Plastik-Material konditioniert werden, und wobei die Barette in Schachteln, insbesondere aus Karton, verpackt sind/werden.

7. Verfahren gemäß Anspruch 6, wobei das Barett mittels eines die Portionen abdeckenden komplementären Deckels geschlossen wird, welcher insbesondere auf das Barett eingeklinkt ist, und aus durchsichtigem, thermisch geformtem Plastik-Material besteht.

8. Verfahren gemäß Anspruch 1, wobei der Formungs-Kopf aus zwei Blenden gebildet wird, wobei das Zuführen gefrorener Konditorei-Ware alternativ zu der einen oder der anderen der Blenden mittels einer drehbaren Zuführ-Vorrichtung ("boisseau") erfolgt, wodurch sicherstellt wird, dass die Verteilung und die konstituierenden Messer der Blenden in synchronisierter Weise betätigt werden, damit stromaufwärts kein Gegendruck auftritt, und daher **dadurch**, dass bei vollständigem Öffnen einer der Blenden die andere vollständig geschlossen ist, keine spürbare Variation der Zuführ-Menge auftritt.

9. Verfahren gemäß Anspruch 8, wobei die Scheffel-/Zuführ-Vorrichtung und die Blenden individuell durch Servomotoren betätigt werden, so dass es möglich ist, kontinuierlich Portionen mit voneinander verschiedenem Durchmesser ("revolution") zu realisieren.
